# NEW EUROPEAN PATENT SPECIFICATION

(11) **EP 2 674 734 B2**
(45) Date of publication and mention of the opposition decision: **17.10.2018**
(45) Mention of the grant of the patent: 29.07.2015
(21) Application number: 13170544.4
(22) Date of filing: 05.06.2013
(51) Int. Cl.: G01G 11/06, A01B 79/00

(54) **Method for the registration of manure transport**
Verfahren zur Registrierung von Dungtransport
Procédé pour l'enregistrement de transport de fumier

(30) Priority: 12.06.2012 NL 2008992
(43) Date of publication of application: 18.12.2013
(73) Proprietor: Veenhuis Machines B.V., NL-8102 HE Raalte (NL)
(72) Inventor: Veenhuis, Walter Theodorus Maria, 8101 AV Raalte (NL); Dokter, Hendrik Gerrit, 7437 XP Bathmen (NL)
(74) Representative: Algemeen Octrooi- en Merkenbureau B.V.

(56) References cited:
- EP-A1- 1 783 673
- EP-A1- 1 783 673
- DE-A1-102008 005 650
- DE-A1-102010 053 331
- NL-C- 1 012 045
- NL-C2- 1 015 440
- 'BROCHURE MESTBELEID: VERVOEREN VAN DIERLIJKE MEST' RIJKSDIENST VOOR ONDERNEMEND NEDERLAND, DIENSTREGELINGEN 29 December 2008,

## Description

The present invention, according to a first aspect thereof, relates to a method for the registration of transport movements on public roads of manure, in particular semi-liquid manure, in a manure transport vehicle from a storage location of a supplier of manure to a delivery location of a buyer of manure, comprising the steps of:
a. transferring an amount of manure to be transported into a manure transport vehicle at the storage location, during which transfer the weight (W1) of the amount of manure being transferred is determined,
b. transporting the manure to a delivery location in the manure transport vehicle; and
c. transferring manure from the manure transport vehicle to a manure collecting device at the delivery location, during which transfer the weight (W2) of the amount of manure being transferred is determined;
d. wherein W1 and W2 are instantaneously transmitted to a registering authority by electronic means, prior to step c), preferably prior to step b), in the case of W1, and after step c) in the case of W2.
The term "prior to" is not so much intended to indicate that the transmission directly precedes the subsequently mentioned activity. The term "prior to" is in particular used herein to indicate a sequence. The term "manure" as used herein is also intended to mean "(a substance containing) organic fertilizers".

Such a method is used in the Netherlands for the registration under the authority of the government of manure transport and the harmful substances present therein. The registration is carried out by a central official authority in order to prevent undesirably large amounts of harmful substances, such as Nitrogen (N) and Phosphate (P₂O₅) finding their way into the environment. In the known method, a few samples are to that end taken during the transfer of the manure in step a), which samples are physically despatched to the registering authority. At the registering authority, the samples are analysed upon receipt and the results of the analysis and the electronically transmitted data of a transport movement are combined so as to calculate the amount of harmful substances being moved. In addition to the weight data, the electronic data may comprise position data, on the basis of which the location of the vehicle is passed on. This is how the manner of transportation of manure from producers to users is determined in the Netherlands. Checking takes place in that a driver of a manure transport vehicle on public roads must be able to prove that he has carried out the required actions for a correct registration. Incidentally, it is not necessary that a determination of W1 or W2 takes place during step a) or step c), respectively. Said determination may take place during the aforesaid steps, using means integrated in the vehicle, but alternatively the weight could also be determined by means of a weighbridge or otherwise.

A drawback of the known system is the fact that a great deal of administrative work is needed and that the system is susceptible to fraud. The object of the present invention is to eliminate or at least alleviate the drawbacks of the known system. According to the first aspect of the present invention, this object is achieved in that several analyses of the composition of the manure flowing to or into the manure transport vehicle are carried out during the transfer in step a), the data of which analyses are transmitted to the registering authority prior to step c). The analysis data can be transmitted to the registering authority as raw data or as already (partially) processed data. An advantage of the present invention is that the analysis is carried out during the transfer in step a), so that no physical samples need to be taken and despatched for analysis elsewhere. This leads to a saving in time and costs. A second advantage is the fact that tampering with physical samples is not possible. If the analysis is carried out during the transfer, fraud will be difficult. After transmission of the analysis data, preferably prior to step b), manipulation of the data is no longer possible at all. A third advantage is the fact that the calculation of the amount of harmful substances to be transported can be carried out relatively very quickly and will be available to the registering authority within a relatively very short period of time. This provides a possibility of deciding, even before step c), that the manure transport vehicle is to be checked. The object aimed at by the present invention is thus achieved.

The invention is easy to realise in particular in the Netherlands because manure transport vehicles are already fitted with communication means by which the weight data regarding the manure transport are transmitted to the registering authority, which means can be easily extended to make transmission of the analysis data possible. But even if that were not the case, a situation which may occur in other countries, the investment threshold will still be low in relation to the advantages that can be obtained by means of the invention.

According to the present invention it is preferable if the analysis data are transmitted to the registering authority prior to step b). The data in question can in such a case be available to the registering authority before the departure of the manure transport vehicle, so that the registering authority can assess at an early stage whether additional sampling or analysis is necessary before the manure is discharged from the manure transport vehicle at the delivery location, or even before the manure transport vehicle is allowed to depart from the storage location. Thus, an incorrect analysis can be easily corrected at an early stage.

It is practical and preferable if available analysis data are transmitted to the registering authority together with the weight data. Thus it is possible to make use of existing infrastructure, so that the investment that is necessary for adapting existing systems is minimized.

Preferably, the analysing means for analysing the composition of the manure, at least insofar as desired, form (a possibly separable) part of the manure transport vehicle. The analysis of the manure can thus take place during the transfer into the manure transport vehicle. This has the advantage that the analysis equipment is available at all times during the transfer of manure to or from a manure transport vehicle, regardless of where the storage location or the delivery location of the manure is situated, and thus independently of the question if analysing means are present at the location in question. Another advantage is the fact that the analysis data can be simply transmitted together with the weight data in this way. The term "separable" is understood to mean that the analysing means may be provided on an element that can be detached from the manure transport vehicle, for example a filling hose. The separable part can in that case be carried along with the manure transport vehicle at all times, however.

In a preferred method according to the present invention, at least the concentration of Nitrogen and the concentration of Phosphate in the manure are analysed by the analysing means. Nitrogen and Phosphate are the main harmful substances contained in semi-liquid manure for which standards for the spreading thereof on farmland have been established. They are also the substances that are determined from the physical samples in the known method.

In a preferred embodiment according to the present invention, the analysis is carried out with a so-called Near InfraRed Spectroscopy (NIRS) sensor. Such a sensor is known per se, it can be used in a simple manner for instantaneously analysing the concentrations of Nitrogen and Phosphate present in semi-liquid manure during the transfer thereof.

To obtain an even more precise registration it is preferable if several analyses of the composition of the manure flowing to or into the manure collecting device are also carried out during the transfer in step c), the data of which analyses are transmitted to the registering authority. The analysis data can then be checked against the data of the analysis carried out during step a). Thus, unexpected inaccuracies of the first registration can be detected. Moreover, this reduces the risk of a manure transport vehicle loading manure comprising relatively low concentrations of nitrogen and/or phosphate during step a), which manure is subsequently discharged at an unregistered location during step b), after which manure comprising relatively high concentrations is loaded, which manure is finally delivered at the destination location in step c). This can be prevented in a relatively simple manner, of course, if the analysis equipment registers all loading and unloading movements into and out of the manure transport vehicle.

A manure transport vehicle is designed for transporting manure, in particular semi-liquid manure, on public roads from a storage location of a supplier of manure to a delivery location of a buyer of manure, comprising a chassis with wheels and a storage tank for storing manure during transport, which storage tank is provided with an inlet opening and an outlet opening, which may or may not coincide with the inlet opening, the manure transport vehicle further comprising communication means designed for electronically transmitting information regarding the weight of the cargo of the vehicle to a registering authority.

Such a manure transport vehicle is known for use in a method according to the first aspect of the present invention. The known manure transport vehicle is thus suitable for electronically transmitting data regarding the weight of a cargo to be transported or being transported to a registering authority. The known vehicle may also be equipped with a GPS system, by means of which the position of the vehicle can be determined for the purpose of communicating this position to the registering authority. This may take place directly before and/or directly after loading and/or unloading, for example, but the position of the manure transport vehicle may also be communicated to the registering authority during the manure transport.

A limitation of the known manure transport vehicle is in particular connected with the use thereof, which, as discussed above, leads to a relatively great deal of administrative work and which, in addition, is susceptible to fraud.

The manure transport vehicle makes it possible to reduce the amount of administrative work connected with manure transport movements and/or to reduce the susceptibility to fraud of the manure registration. This manure transport vehicle is provided with analysing means near the inlet opening, by means of which, in use, the composition of manure flowing into the storage tank is analysed. Thus it is possible to analyse the amount of harmful substances in manure to be transported at the time of the filling of the storage tank of the vehicle and to electronically transmit the analysis data, preferably together with other data such as the weight of the cargo and/or the position of the vehicle, to a registering authority which will directly have the transmitted data at its disposal.

In a preferred embodiment of the present invention, the analysing means are designed for instantaneously determining at least a concentration of Nitrogen and a concentration of Phosphate in the manure. Nitrogen and Phosphate are two substances whose registration takes place centrally, at least in the Netherlands, so as to prevent excessive amounts of said substances finding its way into the environment.

In order to be able to transmit compact and/or uniform data to the central authority, it is preferable if the manure transport vehicle is provided with a computer unit which processes the data analysed by the analysing means prior to their transmission.

If the inlet opening and the outlet opening do not coincide it is preferable if analysing means are provided near the outlet opening, by means of which, in use, the composition of manure flowing from the storage tank is analysed. Thus it can be verified whether the analysis that took place when the manure flowed into the storage tank was carried out in a reliable manner. If the equipment is designed so that it is ensured that all the movements of the manure flowing into and out of a storage tank of a manure transport vehicle are registered, this will also reduce the susceptibility to fraud of the registration of manure transport movements.

The present invention will be explained in more detail below on the basis of an exemplary embodiment of a method according to the present invention with reference to the figures, in which:
Figure 1 is a schematic view of information flows taking place during use of the present invention;
Figure 2 is another diagram of a method according to the present invention; and
Figure 3 is a schematic view of a manure transport vehicle according to an example.

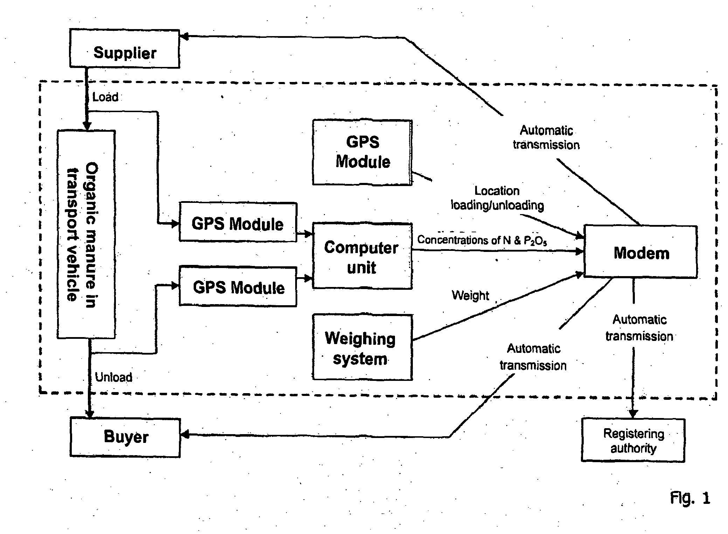

With reference now to figure 1, there is shown a schematic view of a part of a method for use in the present invention. In figure 1, dotted lines illustrate which elements of the present invention are preferably included in a manure transport vehicle according to the present invention. Furthermore, the thick arrow in the left-hand column represents a physical manure flow and thin arrows represent information flows. As is shown in the left-hand column, a manure transport vehicle is driven to a supplier's storage tank for carrying out a manure transport movement. At the supplier's location, semi-liquid manure is transferred from the supplier's storage location to a storage tank of the manure vehicle. In the manure transport vehicle, analysing means, in this case a Near InfraRed Spectroscopy sensor (referred to as NIR sensor, are provided, by means of which the concentrations of Nitrogen and Phosphate in the manure are instantaneously analysed during the transfer. Said analysing preferably takes place periodically, for example after every thousand litres of manure flowing into the storage tank. The data analysed by the sensor are forwarded to a computer unit, which converts the analysis data into a format required by a registering authority. Said data are subsequently forwarded to a modem in the manure transport vehicle. In the manure transport vehicle a weighing system is furthermore provided, by means of which the transferred amount of semi-liquid manure is determined. These data, too, are transmitted to the modem. A GPS module is furthermore provided in the manure transport vehicle, by means of which the position of the manure transport vehicle is determined. Also the position data of the manure transport vehicle are transmitted to the modem, viz. by the GPS module. The collected data are automatically transmitted to a registering authority via the modem. Depending on the applicable rules, the manure transport vehicle can depart from the supplier's location directly after the transmission of the data, or it must wait until the registering authority has confirmed that the data in question have been received and possibly has given its approval for the transport.

The manure transport vehicle then drives from the supplier's location to the buyer's location. During this transport, the GPS module may send a signal to the registering authority via the modem, for example periodically, so that the transport can be monitored by the registering authority.

Upon arrival at the buyer's location, the semi-liquid manure can be transferred from the tank to a collecting device from the buyer either directly or after permission has been obtained from the registering authority, depending on the applicable rules. The collecting device may be a storage tank, but it may also be a vehicle by means of which the manure is spread shortly after the delivery of the semi-liquid manure. During the transfer of semi-liquid manure from the manure transport vehicle's storage tank to the buyer's collecting device, the semi-liquid manure is again periodically analysed by means of an NIR sensor. The data from said NIR sensor are again transferred to the computer unit, which processes the analysis data and transmits them to the modem. Also in this case a determination is made, via the weighing system of the manure transport vehicle, of the amount of manure delivered at the location in question. These data, as well as the data from the GPS module, are finally transmitted to the registering authority. The registration of the manure movement and the harmful substances contained therein thus takes place in the most accurate possible manner. It is noted that the weighing system forms part of the manure transport vehicle in this embodiment. Alternatively, the determination of the loaded weight can be carried out by means of a separate weighing system, for example a weighbridge, after which the data from the external weighing system are transmitted to the registering authority, preferably via the modem.

In the method of figure 1, information concerning the loaded and discharged manure is transmitted not only to a registering authority but also to the supplier and the buyer. The advantage for the supplier is that this information can be used in support of the administration of manure supplied. The same advantage applies to the buyer regarding the manure purchased. An additional advantage for a buyer may be that if the manure is directly transferred from the manure transport vehicle to a spreading vehicle, the buyer may already have received specifications at the buyer's location regarding the manure being en route to the spreading vehicle at the moment of departure of the manure transport vehicle from the supplier's location. Thus the buyer can determine in advance, in dependence on the information supplied to him regarding the concentrations of Nitrogen and Phosphate, for example, how many litres of manure per unit area he is allowed to spread on the land. Ideally, the maximum amount of litres of semi-liquid manure that may be spread on the buyer's land can be determined on the basis of the concentrations of Nitrogen and Phosphate during the transfer from the storage location to the storage tank of the vehicle. Thus the required amount of manure can already be determined while the manure is being loaded into the manure transport vehicle, so that the amount of manure being transferred to the manure transport vehicle need not be greater than the amount the buyer will (be allowed to) use.

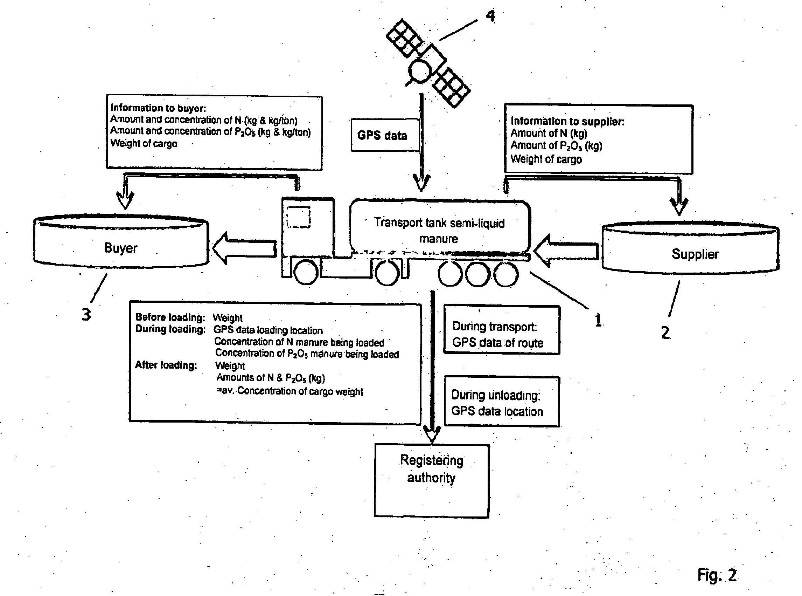

Figure 2 shows an alternative schematic representation of the method of figure 1. A manure transport vehicle 1 loads an amount of semi-liquid manure from a storage location of a supplier 2, during which loading information regarding the concentration of Nitrogen, the concentration of Phosphate and the weight of the amount of manure being transferred is determined by means of the NIR sensor and a weighing device, respectively, in the manure transport vehicle. The amounts of Nitrogen and Phosphate are calculated, using a computer unit, by multiplying the respective concentrations by the loaded weight. These data are provided to the supplier. In addition, said data are transmitted from a satellite, together with the location data determined by the GPS module, to a registering authority directly after said loading. The manure transport vehicle 1 then leaves on its way to the buyer 3. During transport, location data of the manure transport vehicle 1 determined by the GPS module are periodically transmitted to the registering authority. Upon discharging at the location of the buyer 3, the concentrations of Nitrogen and Phosphate and the weight of the transferred amount of manure are again determined by the NIR sensor and the weighing system, respectively, of the manure transport vehicle. After being processed by the computer unit, said data are transmitted to the registering authority and to the buyer 3 directly after discharging.

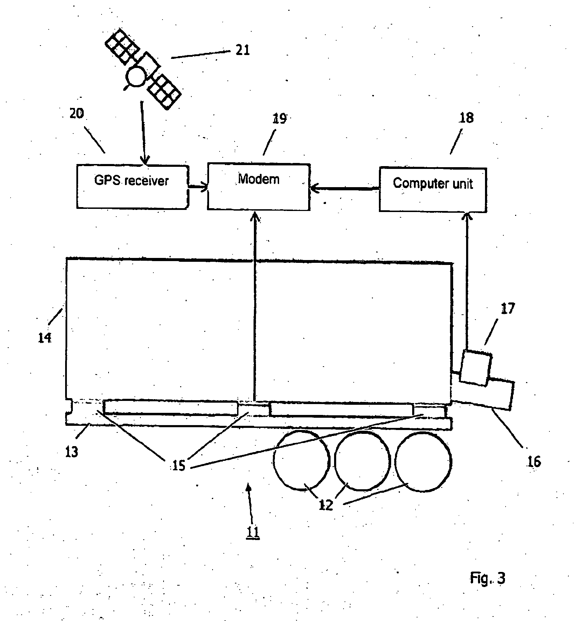

Figure 3, to conclude, schematically shows a manure transport vehicle 11 according to an example. In this case the manure transport vehicle 11 is a trailer on wheels 12, a chassis 13 and a storage tank 14. Weighing cells 15 are provided between the storage tank 14 and the chassis 13 for determining the weight of the cargo in the storage tank 14. The storage tank 14 is provided with a fill and discharge line 16 and an NIR sensor 17, which, upon filling and emptying, respectively, makes an instantaneous analysis of the concentrations of Nitrogen and Phosphate in the manure flowing through the fill and discharge line 16. The NIR sensor 17 is connected to a computer unit 18, by means of which data analysed by the NIR sensor 17 and determined by the weighing cells 15 are converted into a total weight of Nitrogen and Phosphate. The computer unit subsequently transmits the computed data to a modem 19. The weighing cells are likewise connected to the modem 19 and transmit data regarding the weight of the cargo to the modem 19 before and after the loading and before and after the discharging of the manure. A GPS receiver 20 installed in the manure transport vehicle 11 receives position data from a satellite 21 which, incidentally, does not form part of the manure transport vehicle 11, and subsequently transmits the data to the modem 19. The collected data are transmitted to an authority (not shown in figure 3) by the modem 19 in accordance with a method shown in figures 1 and 2.

In the appended figures and the above description only one exemplary embodiment of the present invention is shown and described. It will be understood that several modifications, which may or may not be obvious to the skilled person, can be made, which modifications fall within the scope of the present invention as defined in the following claims. Thus, elements which are shown as being part of a trailer in figure 3 may also form part of a vehicle that tows the trailer. The weight data regarding the cargo can also be determined by external means, such as a weighbridge, after which the data in question are transmitted via a modem. Where mention is consistently made of an analysis of the manure during loading and during unloading in figures 1 and 2, it is possible to carry out the analysis only once, preferably during loading. Although it is desirable to integrate the NIR sensor, or any other suitable analysing means, in a manure transport vehicle, it is also possible in a method according to the present invention to make use of analysing means which are not integrated in the manure transport vehicle but, for example, in a transfer device of the supplier or the buyer. In addition to, or instead of, Nitrogen and Phosphate it is also possible to determine concentrations of other substances via the analysing means, of course, for example Phosphorus (P), on the basis of which an indication of the concentration of Phosphate (using a factor of 2.29) can be determined.

## Claims

1. A method for the registration of transport movements on public roads of manure, in particular semi-liquid manure, in a manure transport vehicle from a storage location of a supplier of manure to a delivery location of a buyer of manure, comprising the steps of:
a) transferring an amount of manure to be transported into a manure transport vehicle at the storage location, during which transfer the weight (W1) of the amount of manure transferred is determined,
b) transporting the manure to a delivery location in the manure transport vehicle; and
c) transferring manure from the manure transport vehicle to a manure collecting device at the delivery location, during which transfer the weight (W2) of the amount of manure being transferred is determined;
d) wherein W1 and W2 are instantaneously transmitted to a registering authority by electronic means, prior to step c), in the case of W1, and after step c) in the case of W2,
**characterised in that** several analyses of the composition of the manure flowing to or into the manure transport vehicle are carried out during the transfer in step a), the data of which analyses are transmitted to the registering authority prior to step c).

2. A method according to claim 1, **characterised in that** the analysis data are transmitted to the registering authority prior to step b).

3. A method according to claim 1 or 2, **characterized in that** available analysis data are transmitted to the registering authority together with the weight data.

4. A method according to one or more of the preceding claims, **characterised in that** the analysing means for analysing the composition of the manure, at least insofar as desired, form (a possibly separable) part of the manure transport vehicle.

5. A method according to one or more of the preceding claims, **characterised in that** at least the concentration of Nitrogen and the concentration of Phosphate in the manure are analysed by the analyzing means.

6. A method according to one or more of the preceding claims, **characterised in that** the analysis is carried out with a so-called Near InfraRed Spectroscopy (NIRS) sensor.

7. A method according to one or more of the preceding claims, **characterised in that** several analyses of the composition of the manure flowing to or into the manure collecting device are also carried out during the transfer in step c), the data of which analyses are transmitted to the registering authority.

## Patentansprüche

1. Verfahren zur Registrierung von Transportbewegungen von Dung, insbesondere halbflüssigen Dungs, auf öffentlichen Straßen in einem Dungtransportfahrzeug von einem Lagerort eines Dunganbieters zu einem Lieferort eines Dungabnehmers, welches die Schritte umfasst:
a) Umladen einer zu transportierenden Menge von Dung in ein Dungtransportfahrzeug am Lagerort, wobei während des Umladens das Gewicht (W1) der umgeladenen Menge an Dung bestimmt wird,
b) Transportieren des Dungs im Dungtransportfahrtzeug zu einem Lieferort; und
c) Umladen von Dung von dem Dungtransportfahrtzeug in eine Dungsammelvorrichtung am Lieferort, wobei während dieses Umladens das Gewicht (W2) der umgeladenen Menge an Dung bestimmt wird;
d) wobei W1 und W2 sofort auf elektronischem Wege zu einer Registrierungsbehörde übermittelt werden, im Fall von W1 vor Schritt c) und im Fall von W2 nach Schritt c),
**dadurch gekennzeichnet, dass** während des Umladens in Schritt a) mehrere Analysen der Zusammensetzung des zum oder in das Dungtransportfahrzeug fließenden Dungs durchgeführt werden, wobei die Daten dieser Analysen vor Schritt c) zur Registrierungsbehörde übermittelt werden.

2. Verfahren nach Anspruch 1, **dadurch gekennzeichnet, dass** die Analysedaten vor Schritt b) zur Registrierungsbehörde übermittelt werden.

3. Verfahren nach Anspruch 1 oder 2, **dadurch gekennzeichnet, dass** vorhandene Analysedaten zusammen mit den Gewichtsdaten zur Registrierungsbehörde übermittelt werden.

4. Verfahren nach einem oder mehreren der vorhergehenden Ansprüche, **dadurch gekennzeichnet, dass** die Analysevorrichtung zum Analysieren der Zusammensetzung des Dungs, zumindest insofern gewünscht, einen (möglicherweise abtrennbaren) Teil des Dungtransportfahrzeugs bildet.

5. Verfahren nach einem oder mehreren der vorhergehenden Ansprüche, **dadurch gekennzeichnet, dass** zumindest die Stickstoffkonzentration und die Phosphatkonzentration im Dung von der Analysevorrichtung analysiert werden.

6. Verfahren nach einem oder mehreren der vorhergehenden Ansprüche, **dadurch gekennzeichnet, dass** die Analyse mit einem sogenannten NahlnfraRotSpektroskopie (NIRS)-Sensor durchgeführt wird.

7. Verfahren nach einem oder mehreren der vorhergehenden Ansprüche, **dadurch gekennzeichnet, dass** mehrere Analysen der Zusammensetzung des zur oder in die Dungsammelvorrichtung fließenden Dungs auch während des Umladens in Schritt c) durchgeführt werden, wobei die Daten dieser Analysen zu der Registrierungsbehörde übermittelt werden.

## Revendications

1. Procédé pour l'enregistrement de mouvements de transport, sur des routes publiques, de fumier, en particulier de fumier semi-liquide, dans un véhicule de transport de fumier d'un lieu de stockage d'un fournisseur de fumier à un lieu de livraison d'un acheteur de fumier, comprenant les étapes de :
a) transfert d'une quantité de fumier destinée à être transportée dans un véhicule de transport de fumier au lieu de stockage, durant lequel transfert le poids (W1) de la quantité de fumier transférée est déterminé,
b) transport du fumier jusqu'à un lieu de livraison dans le véhicule de transport de fumier ; et
c) transfert de fumier du véhicule de transport de fumier à un dispositif de collecte de fumier au lieu de livraison, durant lequel transfert le poids (W2) de la quantité de fumier transférée est déterminé ;
d) dans lequel W1 et W2 sont transmis instantanément à une autorité d'enregistrement par des moyens électroniques, avant l'étape c), dans le cas de W1, et après l'étape c) dans le cas de W2,
**caractérisé en ce que** plusieurs analyses de la composition du fumier s'écoulant vers ou dans le véhicule de transport de fumier sont réalisées durant le transfert dans l'étape a), les données desquelles analyses sont transmises à l'autorité d'enregistrement avant l'étape c).

2. Procédé selon la revendication 1, **caractérisé en ce que** les données d'analyse sont transmises à l'autorité d'enregistrement avant l'étape b).

3. Procédé selon la revendication 1 ou 2, **caractérisé en ce que** des données d'analyse disponibles sont transmises à l'autorité d'enregistrement conjointement avec les données de poids.

4. Procédé selon une ou plusieurs des revendications précédentes, **caractérisé en ce que** les moyens d'analyse pour analyser la composition du fumier, au moins dans la mesure souhaitée, forment une partie (éventuellement séparable) du véhicule de transport de fumier.

5. Procédé selon une ou plusieurs des revendications précédentes, **caractérisé en ce qu'**au moins la concentration en azote et la concentration en phosphate dans le fumier sont analysées par les moyens d'analyse.

6. Procédé selon une ou plusieurs des revendications précédentes, **caractérisé en ce que** l'analyse est réalisée avec un capteur dit de spectroscopie infrarouge proche (NIRS).

7. Procédé selon une ou plusieurs des revendications précédentes, **caractérisé en ce que** plusieurs analyses de la composition du fumier s'écoulant vers ou dans le dispositif de collecte de fumier sont également réalisées durant le transfert dans l'étape c), les données desquelles analyses sont transmises à l'autorité d'enregistrement.
